# EUROPEAN PATENT APPLICATION

(11) **EP 4 749 111 A1**
(43) Date of publication of application: **27.05.2026**
(21) Application number: 25217467.7
(22) Date of filing: 20.11.2025
(51) Int. Cl.: F02C 9/40

(54) **SWITCHABLE AERO ENGINE DUAL FUEL CONTROL SYSTEM WITH DHFC**

(30) Priority: 20.11.2024 US 202418954121
(71) Applicant: Pratt & Whitney Canada Corp., (01BE5) Longueuil, QC J4G 1A1 (CA)
(72) Inventor: LU, Xuening, (01BE5) Longueuil, J4G 1A1 (CA); TANG, Poi Loon, (01BE5) Longueuil, J4G 1A1 (CA); LISIO, Carmine, (01BE5) Longueuil, J4G 1A1 (CA)
(74) Representative: Dehns

(57) **Abstract**

A method of operating a dual fuel gas turbine engine (102) includes operating the engine (102) with a first fuel according to a first control loop (202). The method also includes while the engine (102) is operating with the first fuel, bumplessly transitioning the engine (102) to operate with a second fuel, and operating the engine (102) with the second fuel according to a second control loop (204).

## Description

### TECHNICAL FIELD

This disclosure generally relates to gas turbine engines. More specifically, this disclosure relates to switchable aero engine dual fuel control systems with digital hydrogen fuel control (DHFC).

### BACKGROUND

Some existing aero engines utilize internal combustion of a liquid hydrocarbon fuel, such as kerosene, for operation. However, the combustion of liquid hydrocarbon fuel creates undesirable emissions. Interest exists for aero engine systems that can alternate between liquid hydrocarbon fuels and carbon free gaseous fuel, such as hydrogen, during flight. Compared to a purely hydrogen fueled aircraft, a dual-fuel aircraft may offer several advantages.

### SUMMARY

The present invention relates to switchable aero engine dual fuel control system with DHFC.

In an aspect of the present invention, a method of operating a dual fuel gas turbine engine includes operating the engine with a first fuel according to a first control loop. The method also includes while the engine is operating with the first fuel, bumplessly transitioning the engine to operate with a second fuel, and operating the engine with the second fuel according to a second control loop.

Any single one or any combination of the following features may be used with the examples above. The first fuel may be a liquid fuel, the second fuel may be a gaseous fuel, and the engine may include a gas generator, a combustion chamber, a combustion burner, a gaseous fuel pressure regulating valve (PRV), a gaseous fuel metering valve (FMV), and a fuel switching valve. To bumplessly transition the engine to operate with the second fuel, the method may further include regulating via the gaseous fuel PRV, based on a predetermined inlet pressure (Pin) corresponding with a requested gas generator speed (NG), a Pin of the gaseous FMV; when the Pin of the gaseous FMV achieves a Pin accuracy corresponding with the predetermined Pin, opening the gaseous FMV; and when an outlet pressure (Pout) of the gaseous FMV is greater than a predetermined maximum of combustion burner pressure (Pcomb), opening the fuel switching valve to allow the gaseous fuel to enter the combustion chamber and shutoff a supply of the liquid fuel from the combustion chamber. Operating the engine with the first fuel according to the first control loop may include operating the gas generator at the requested NG, and determining an anticipated liquid fuel demand of the engine according to the requested NG. Operating the engine with the second fuel according to the second control loop may include operating the gas generator at the requested NG. The first fuel may be a gaseous fuel, the second fuel may be a liquid fuel, and the engine may include a gas generator, a combustion chamber, a combustion burner, a liquid fuel control unit, a liquid FMV, and a fuel switching valve. To bumplessly transition the engine to operate with the second fuel, the method may further include regulating a supply of the liquid fuel via the liquid fuel control unit, based on a predetermined fuel schedule vs liquid FMV command corresponding with a requested NG, and upon receiving a transition request, opening the fuel switching valve to allow the liquid fuel to enter the combustion chamber and shutoff a supply of the gaseous fuel from the combustion chamber. Operating the engine with the first fuel according to the first control loop may include operating the gas generator at the requested NG, and determining an anticipated gaseous fuel demand of the engine according to the requested NG. Operating the engine with the second fuel according to the second control loop may include operating the gas generator at the requested NG. To bumplessly transition the engine to operate with the second fuel, the method further may further include operating the engine with a mixture of the first fuel and the second fuel during the bumpless transition. The engine may be included in an aircraft, and the bumpless transition may be initiated by a pilot of the aircraft.

In a further aspect of the present invention, a dual fuel gas turbine engine includes a controller configured to operate the engine with a first fuel according to a first control loop. The controller is further configured to while the engine is operating with the first fuel, bumplessly transition the engine to operate with a second fuel, and operate the engine with the second fuel according to a second control loop.

Any single one or any combination of the following features may be used with the examples above. The first fuel may be a liquid fuel, the second fuel may be a gaseous fuel, and the engine may include a gas generator, a combustion chamber, a combustion burner, a gaseous fuel pressure regulating valve (PRV), a gaseous fuel metering valve (FMV), and a fuel switching valve. To bumplessly transition the engine to operate with the second fuel, the controller may be configured to regulate via the gaseous fuel PRV, based on a predetermined inlet pressure (Pin) corresponding with a requested gas generator speed (NG), a Pin of the gaseous FMV; when the Pin of the gaseous FMV achieves a Pin accuracy corresponding with the predetermined Pin, open the gaseous FMV; and when an outlet pressure (Pout) of the gaseous FMV is greater than a predetermined maximum of combustion burner pressure (Pcomb), open the fuel switching valve to allow the gaseous fuel to enter the combustion chamber and shutoff a supply of the liquid fuel from the combustion chamber. To operate the engine with the first fuel according to the first control loop, the controller may be configured to operate the gas generator at the requested NG, and determine an anticipated liquid fuel demand of the engine according to the requested NG. To operate the engine with the second fuel according to the second control loop, the controller may be configured to operate the gas generator at the requested NG. The first fuel may be a gaseous fuel, the second fuel may be a liquid fuel, and the engine may include a gas generator, a combustion chamber, a combustion burner, a liquid fuel control unit, a liquid FMV, and a fuel switching valve. To bumplessly transition the engine to operate with the second fuel, the controller may be configured to regulate a supply of the liquid fuel via the liquid fuel control unit, based on a predetermined fuel schedule vs liquid FMV command corresponding with a requested NG, and upon receiving a transition request, open the fuel switching valve to allow the liquid fuel to enter the combustion chamber and shutoff a supply of the gaseous fuel from the combustion chamber. To operate the engine with the first fuel according to the first control loop, the controller may be configured to operate the gas generator at the requested NG, and determine an anticipated gaseous fuel demand of the engine according to the requested NG. To operate the engine with the second fuel according to the second control loop, the controller may be configured to operate the gas generator at the requested NG. To bumplessly transition the engine to operate with the second fuel, the controller may be configured to operate the engine with a mixture of the first fuel and the second fuel during the bumpless transition.

In a further aspect of the present invention, a non-transitory machine readable medium includes instructions that when executed cause at least one processor to operate a dual fuel gas turbine engine with a first fuel according to a first control loop. The instructions when executed also cause the at least one processor to, while the engine is operating with the first fuel, bumplessly transition the engine to operate with a second fuel, and operate the engine with the second fuel according to a second control loop.

Any single one or any combination of the following features may be used with the examples above. The first fuel may be a liquid fuel, the second fuel may be a gaseous fuel, and the engine may include a gas generator, a combustion chamber, a combustion burner, a gaseous fuel pressure regulating valve (PRV), a gaseous fuel metering valve (FMV), and a fuel switching valve. To bumplessly transition the engine to operate with the second fuel, the instructions when executed may cause the at least one processor to regulate via the gaseous fuel PRV, based on a predetermined inlet pressure (Pin) corresponding with a requested gas generator speed (NG), a Pin of the gaseous FMV; when the Pin of the gaseous FMV achieves a Pin accuracy corresponding with the predetermined Pin, open the gaseous FMV; and when an outlet pressure (Pout) of the gaseous FMV is greater than a predetermined maximum of combustion burner pressure (Pcomb), open the fuel switching valve to allow the gaseous fuel to enter the combustion chamber and shutoff a supply of the liquid fuel from the combustion chamber. To operate the engine with the first fuel according to the first control loop, the instructions when executed may cause the at least one processor to operate the gas generator at the requested NG, and determine an anticipated liquid fuel demand of the engine according to the requested NG. To operate the engine with the second fuel according to the second control loop, the instructions when executed may cause the at least one processor to operate the gas generator at the requested NG. The first fuel may be a gaseous fuel, the second fuel may be a liquid fuel, and the engine may include a gas generator, a combustion chamber, a combustion burner, a liquid fuel control unit, a liquid FMV, and a fuel switching valve. To bumplessly transition the engine to operate with the second fuel, the instructions when executed may cause the at least one processor to regulate a supply of the liquid fuel via the liquid fuel control unit, based on a predetermined fuel schedule vs liquid FMV command corresponding with a requested NG, and upon receiving a transition request, open the fuel switching valve to allow the liquid fuel to enter the combustion chamber and shutoff a supply of the gaseous fuel from the combustion chamber. To operate the engine with the first fuel according to the first control loop, the instructions when executed may cause the at least one processor to operate the gas generator at the requested NG, and determine an anticipated gaseous fuel demand of the engine according to the requested NG. To operate the engine with the second fuel according to the second control loop, the instructions when executed may cause the at least one processor to operate the gas generator at the requested NG. To bumplessly transition the engine to operate with the second fuel, the instructions when executed may cause the at least one processor to operate the engine with a mixture of the first fuel and the second fuel during the bumpless transition. The engine may be included in an aircraft, and the bumpless transition may be initiated by a pilot of the aircraft.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A and 1B illustrate a schematic view of a generic aero engine system in accordance with this disclosure;
FIGURES 2A and 2B illustrate an example control flow of the system of FIGURES 1A and 1B in accordance with this disclosure; and
FIGURE 3 illustrates a flowchart for an example method for dual fuel control in accordance with this disclosure.

### DETAILED DESCRIPTION

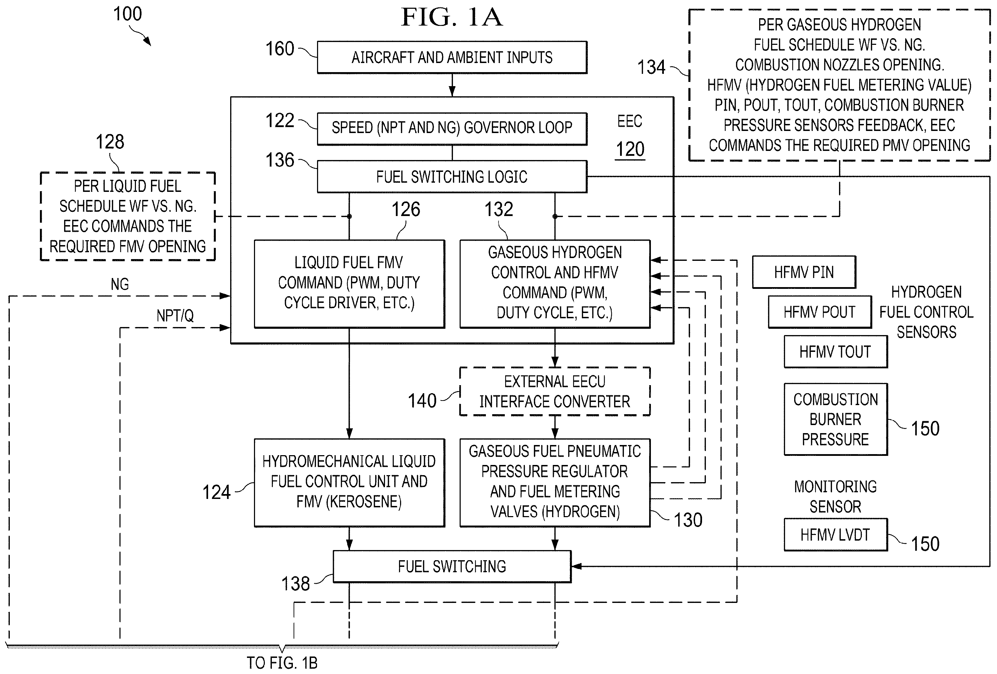

FIGURES 1A through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As described above, a dual-fuel aircraft may offer several advantages over a purely hydrogen fueled aircraft. For example, it may be easier to achieve certification of an existing aircraft modified for dual fuel that operates with a certified traditional fuel system. Furthermore, any risks introduced from switching fuels in flight are reduced if the second engine continues to run on traditional fuel during switch-over. However, existing control systems are unable to provide fuel modulations of both a liquid fuel such as kerosene, and a gaseous fuel such as hydrogen. The present disclosure provides various embodiments for dual-fuel control of a gas turbine engine. According to the various embodiments, an engine control system may provide for a bumpless transition between a liquid fuel and a gaseous fuel for a gas turbine engine.

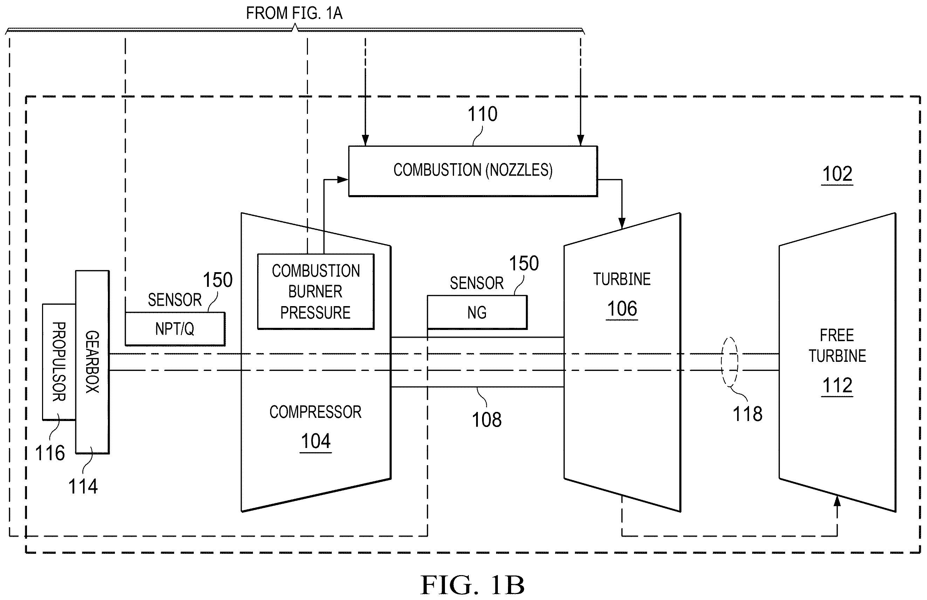

FIGURES 1A and 1B illustrate a schematic view of a generic aero engine system in accordance with this disclosure. In the example of FIGURES 1A and 1B, system 100 is configured for operation with a liquid fuel, such as kerosene, and a gaseous fuel such as hydrogen. In the System 100 includes a gas turbine engine 102 configured with a dual spool configuration. In various embodiments, engine 102 may be a turboprop, turboshaft, or turbofan engine. Engine 102 includes a gas generator. The gas generator includes a compressor 104 connected to turbine 106 through shaft 108, and a combustor 110 for thermal energy generation. Combustor 110 may include a combustion chamber and a combustion burner. Through the thermal expansion of gases burned in combustor 110, the free turbine 112, connected to gearbox 114 and propulsor 116 (e.g., a fan, propellor, or rotor blades) through shaft 118 connected to the gearbox and propulsor (e.g., fan, propeller, or rotor blades) to provide thrust. System 100 also includes an electronic engine control (EEC) 120. EEC 120 implements a speed governor loop 122 for controlling engine 102. Speed governor loop 122 integrates a gaseous fuel control (e.g., Digital Hydrogen Fuel Control [DHFC]) architecture with a liquid fuel control architecture. EEC further includes fuel switching logic 136 to transition engine 102 between liquid and gaseous fuel operation via fuel switching valve 138.

During operation, liquid fuel flow is controlled through a fuel metering valve (FMV) of a hydromechanical liquid fuel control unit 124. In some embodiments, liquid fuel demand is determined by mechanical linkage that translates pilot commands from the cockpit to hydromechanical liquid fuel control unit 124 through a hydromechanical governor. In some embodiments, liquid fuel flow is controlled through speed governor loop 122, which generates a liquid fuel FMV command 126, based on feedback 128 (e.g., fuel inlet pressure, engine shaft speed, combustion burner pressure, etc.) from sensors 150 and inputs 160.

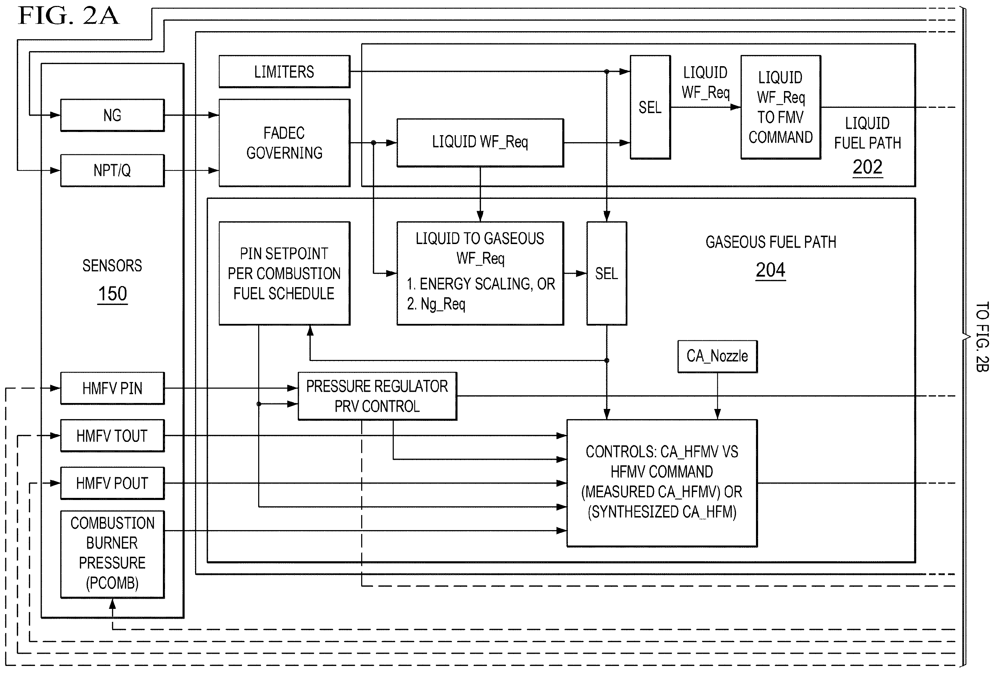

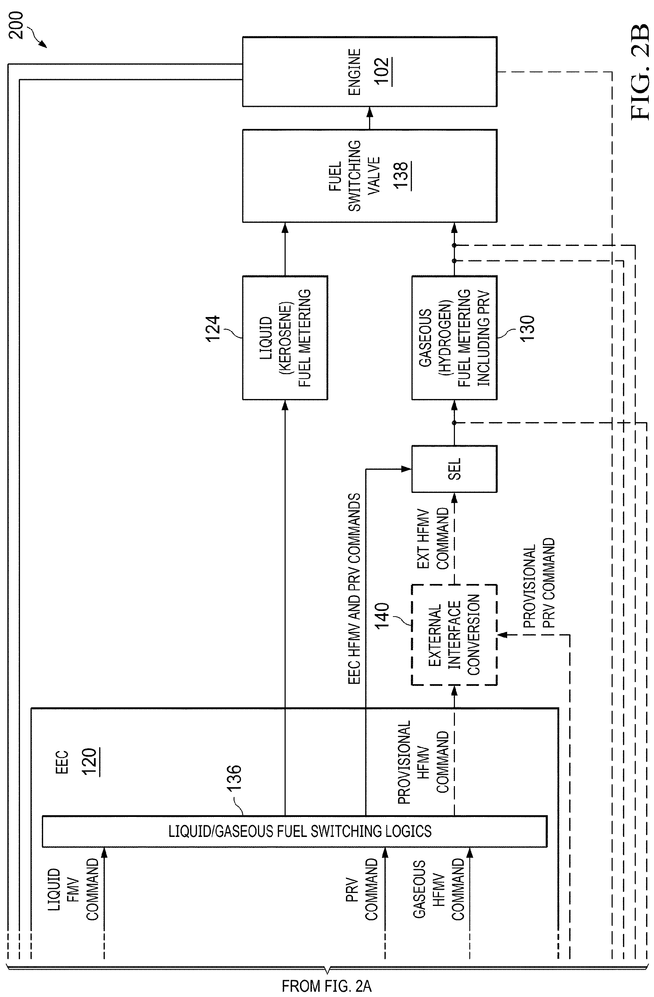

During operation, gaseous fuel flow is controlled in a similar approach as Full Authority Digital Engine Control (FADEC) controlled engines through a gaseous fuel pneumatic pressure regulator (e.g., downstream of a high-pressure gas fuel tank), and gaseous fuel metering valves 130 upstream of combustion nozzles of combustor 110. Gaseous fuel flow is controlled through speed governor loop 122, which generates a gaseous fuel FMV command 126, based on feedback 134 from sensors 150 and inputs 160 (e.g., the pressure dynamic variations across the gaseous fuel metering valves 130 and combustion fuel nozzles of combustor 110, as well as temperature compensation for the compressible flow density correction etc). In some embodiments, an external interface module 140 may be utilized to convert/generate the required format of the gaseous fuel FMV command (e.g., to analog or digital bus - CAN Bus / RS422 etc.). In some embodiments, a hydrogen fuel metering valve position feedback (e.g., a linear variable differential transformer [LVDT]) may be utilized. Because the fuel control is closed loop on the engine gas generator speed, and advanced digital control techniques can accurately control the effector speed/slew rate (e.g., PWM / duty cycle drive) position feedback is unnecessary. However, LVDT monitoring may be useful during engine development tests to verify control performance. Gaseous fuel control further described herein with respect to FIGURES 2A and 2B.

Although FIGURES 1A and 1B illustrate one example of operation of a generic aero engine system 100, various changes may be made to FIGURES 1A and 1B. For example, while FIGURES 1A and 1B show gaseous fuel pneumatic pressure regulator and gaseous fuel metering valves 130 as controlling hydrogen, system 100 could be configured to operate on other gaseous fuels.

FIGURES 2A and 2B illustrate an example control flow 200 of system 100 in accordance with this disclosure. In the Example of FIGURES 2A and 2B, it is presumed that system 100 is utilizing hydrogen as the gaseous fuel. However, it should be understood that system 100 is not limited to hydrogen as a gaseous fuel. During gaseous fuel operation, a pneumatic pressure regulating valve (PRV) or pressure regulator (i.e., 130) is utilized reduce high-pressure hydrogen fuel tank pressure, and regulate the hydrogen fuel tank's outlet pressure to a predetermined pressure setpoint schedule based on combustion fuel flow request. This limits the hydrogen fuel system supply pressure range to what combustion is called for, which permits the gaseous fuel metering valve (i.e. 130) and combustion nozzle (i.e., 110) to operate under subsonic conditions over the full combustion fuel flow range. This is practically true for a hydrogen fuel tank system where the gaseous hydrogen fuel pressure is about four times above the maximum combustion nozzle inlet pressure. The pneumatic pressure regulating valve (PRV) or pressure regulator is a pressure control device that typically operates with a failed close design. The PRV outlet pressure can be controlled electronically by EEC 120, or pneumatically by the PRV itself (via pneumatic backup control). The regulator pressure setpoint is determined by the requested combustion nozzle inlet pressure over the combustion fuel flow ranges plus the pressure drops cross the hydrogen fuel supply system. This can be a function of combustor pressure and requested fuel flow.

Digital Hydrogen Fuel Control (DHFC) regulates the hydrogen fuel metering vale (HFMV) valve (i.e., gaseous fuel metering valves 130) opening to meet the combustion hydrogen fuel flow request limited by engine thermal / mechanical limiters. DHFC control may operate without LVDT position feedback, as the engine system is under governing that constantly readjusts the fuel flow request to meet the governing target. Instead, the DHFC determines the gaseous HMFV command based on pressure and temperature sensors feedback (e.g., feedback 134), such as:
the HFMV inlet pressure (Pin).
the HFMV outlet pressure (Pout). However, if the hydrogen metering valve is designed with built-in pneumatical control mechanism (e.g., outlet pressure control or Pin/Pout ratio control), the Pout sensor may not be needed.
the HFMV outlet temperature (Tout).
the combustion burner pressure (Pcomb).

The requested hydrogen fuel flow is closed loop based on the requested engine gas generator speed, which is determined by EEC engine speed governor loop 122. However, the hydrogen fuel flow control gains will be different from liquid fuel flow control gains due to the liquid fuel (e.g., kerosene) vs Hydrogen fuel energy density difference. Therefore, loop 122 includes separate subloops for requested liquid fuel (202) and hydrogen fuel (204) flow.

In another embodiment, a predetermined hydrogen vs kerosene fuel flow scaling schedule as a function of gas generator speed can be used in conjunction with the liquid fuel flow control loop 202. This approach can eliminate the separate hydrogen fuel flow control loop 204. The hydrogen fuel scaling schedule as a function of gas generator speed can be determined experimentally or theoretically from a high-fidelity engine performance model.

HFMV opening (CA_HFMV) over combustion nozzle effective area (CA_Nozzle) ratio is calculated using the hydrogen fuel request from the fuel-speed control loops, along with the sensor measurements described above. With a known/given combustion nozzle opening configuration over the engine mission, CA_HFMV can be determined. Lastly, the analogue HFMV valve command (e.g., PWM, DC Motor duty cycle etc.) is converted/generated from the predetermined CA_HFMV vs HFMV_PWM relationship in the EEC.

To bumplessly transition to hydrogen fuel during liquid fuel operation, the DHFC serves as an observer that digitally calculate the anticipated hydrogen fuel metering valve (HFMV) opening/command CA_HFMV / HFMV_PWM and HFMV outlet pressure Pout, based on:
the hydrogen fuel demand (WF) schedule at the requested gas generator speed Ng.
the predetermined combustion nozzle effective opening CA_Nozzle
the HFMV inlet pressure setpoint (Pin) as a function of the combustion fuel flow request
the combustion burner pressure (Pcomb) measurement.

Upon a pilot or EEC control requested switch from liquid fuel to hydrogen fuel, the hydrogen pressure regulator is commanded to regulate towards the predetermined HFMV inlet pressure Pin at the requested Ng speed. Once Pin feedback achieves a predetermined pressure control accuracy, the DHFC will initialize the HFMV opening with the anticipated HFMV_PWM command calculated by the EEC.

Once the physical HFMV outlet pressure Pout is greater than the maximum of the combustion burner pressure Pcomb (e.g., +2%), or 100% of the anticipated HFMV Pout value calculated by the EEC, the DHFC commands the fuel switching valve 138 open to allow the hydrogen fuel to route to combustion nozzles of combustor 110 and shutoff the liquid fuel supply.

To bumplessly transition to liquid fuel during liquid fuel during hydrogen fuel operation, mechanical fuel control unit (i.e., 124) continues to receive the engine Ng, Pcomb, and dynamics information. Therefore, EEC liquid control loop 202 can anticipate the liquid fuel flow demand. A Similar control approach is used when switching from hydrogen fuel to liquid fuel control, where EEC 120 initializes the FMV command from the anticipated liquid fuel flow request.

In some embodiments, EEC 120 may provide hysteresis type control when commanding the fuel switching valve 138, which allows the liquid and hydrogen fuel mixture to continue the combustion process during dual fuel switching in and out transitions.

Although FIGURES 2A and 2B illustrate one example control flow 200 of system 100, various changes may be made to FIGURES 2A and 2B. For example, while FIGURES 2A and 2B show fuel control based on kerosene and hydrogen, system 100 could be configured to operate on other liquid and gaseous fuels.

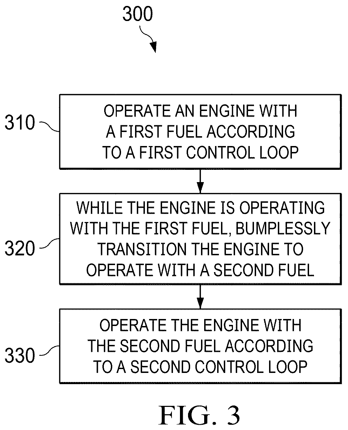

FIGURE 3 illustrates a flowchart for an example method 300 for dual fuel control in accordance with this disclosure. For example, method 300 may be performed by system 100 of FIGURES 1A and 1B. For ease of explanation, the method 300 shown in FIGURE 3 may be described as being implemented or supported using a controller. However, the method 300 shown in FIGURE 3 may be implemented or supported by any suitable device(s) and in any suitable system(s). For example, method 300 may be implemented in or supported by EEC 120 of FIGURES 1A and 1B.

In the example of FIGURE 3, method 300 begins at step 310. At step 310, a controller such as EEC 120 of FIGURES 1A and 1B operates an engine, such as engine 102 of FIGURES 1A and 1B with a first fuel according to a first control loop.

At step 320, while the engine is operating with the first fuel, the controller bumplessly transitions the engine to operate with a second fuel.

At step 330, the controller operates the engine with the second fuel according to a second control loop.

In some embodiments, the first fuel may be a liquid fuel; the second fuel may be a gaseous fuel; and the engine may include a gas generator, a combustion chamber, a combustion burner, a gaseous fuel pressure regulating valve (PRV), and a gaseous fuel metering valve (FMV).

In some embodiments, to bumplessly transition the engine to operate with the second fuel, the method 300 also includes regulating via the gaseous fuel PRV, based on a predetermined inlet pressure (Pin) corresponding with a requested gas generator speed (NG), a Pin of the gaseous FMV; when the Pin of the gaseous FMV achieves a Pin accuracy corresponding with the predetermined Pin, opening the gaseous FMV; and when an outlet pressure (Pout) of the gaseous FMV is greater than a predetermined maximum of combustion burner pressure (Pcomb), opening the fuel switching valve to allow the gaseous fuel to enter the combustion chamber and shutoff a supply of the liquid fuel from the combustion chamber.

In some embodiments, to operate the engine with the first fuel according to the first control loop, the method 300 also includes operating the gas generator at the requested NG, and operating the engine with the second fuel according to the second control loop includes operating the gas generator at the requested NG.

In some embodiments, the first fuel may be a gaseous fuel; the second fuel may be a liquid fuel; and the engine may include a gas generator, a combustion chamber, a combustion burner, a liquid fuel control unit, a liquid fuel metering valve (FMV), and a fuel switching valve.

In some embodiments, to bumplessly transition the engine to operate with the second fuel, the method 300 also includes regulating a supply of the liquid fuel via the liquid fuel control unit, based on a predetermined fuel schedule vs liquid FMV command corresponding with a requested gas generator speed (NG); and upon receiving a transition request, opening the fuel switching valve to allow the liquid fuel to enter the combustion chamber and shutoff a supply of the gaseous fuel from the combustion chamber.

In some embodiments, to operate the engine with the first fuel according to the first control loop, the method 300 also includes operating the gas generator at the requested NG, and determining an anticipated liquid fuel demand of the engine according to the requested NG. In some embodiments, operating the engine with the second fuel according to the second control loop includes operating the gas generator at the requested NG.

In some embodiments, to bumplessly transition the engine to operate with the second fuel, the method 300 also includes operating the engine with a mixture of the first fuel and the second fuel during the bumpless transition.

In some embodiments, the bumpless transition may be initiated by a pilot of an aircraft.

Although FIGURE 3 illustrates one example of a method 300 for dual fuel control, various changes may be made to FIGURE 3. For example, while shown as a series of steps, various steps in FIGURE 3 could overlap, occur in parallel, occur in a different order, occur any number of times, be omitted, or be replaced by other steps.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method of operating a dual fuel gas turbine engine (102), the method comprising:
operating the engine (102) with a first fuel according to a first control loop (202);
while the engine (102) is operating with the first fuel, bumplessly transitioning the engine (102) to operate with a second fuel; and
operating the engine (102) with the second fuel according to a second control loop (204).

2. The method of Claim 1, wherein:
the first fuel is a liquid fuel;
the second fuel is a gaseous fuel;
the engine (102) comprises:
a gas generator (104, 106, 108);
a combustion chamber;
a combustion burner;
a gaseous fuel pressure regulating valve (PRV) (130);
a gaseous fuel metering valve (FMV) (130); and
a fuel switching valve (138); and
to bumplessly transition the engine (102) to operate with the second fuel, the method further comprises:
regulating via the gaseous fuel PRV (130), based on a predetermined inlet pressure (Pin) corresponding with a requested gas generator speed (NG), a Pin of the gaseous FMV (130);
when the Pin of the gaseous FMV (130) achieves a Pin accuracy corresponding with the predetermined Pin, opening the gaseous FMV (130); and
when an outlet pressure (Pout) of the gaseous FMV (130) is greater than a predetermined maximum of combustion burner pressure (Pcomb), opening the fuel switching valve (138) to allow the gaseous fuel to enter the combustion chamber and shutoff a supply of the liquid fuel from the combustion chamber.

3. The method of Claim 2, wherein:
operating the engine (102) with the first fuel according to the first control loop (202) comprises:
operating the gas generator (104, 106, 108) at the requested NG; and
determining an anticipated liquid fuel demand of the engine (102) according to the requested NG; and
operating the engine (102) with the second fuel according to the second control loop (204) comprises operating the gas generator (104, 106, 108) at the requested NG.

4. The method of Claim 1, wherein:
the first fuel is a gaseous fuel;
the second fuel is a liquid fuel;
the engine (102) comprises:
a gas generator (104, 106, 108);
a combustion chamber;
a combustion burner;
a liquid fuel control unit (124);
a liquid fuel metering valve (FMV) (130); and
a fuel switching valve (138); and
to bumplessly transition the engine (102) to operate with the second fuel, the method further comprises:
regulating a supply of the liquid fuel via the liquid fuel control unit (124), based on a predetermined fuel schedule vs liquid FMV command (126) corresponding with a requested gas generator speed (NG); and
upon receiving a transition request, opening the fuel switching valve (138) to allow the liquid fuel to enter the combustion chamber and shutoff a supply of the gaseous fuel from the combustion chamber.

5. The method of Claim 4, wherein:
operating the engine (102) with the first fuel according to the first control loop (202) comprises:
operating the gas generator (104, 106, 108) at the requested NG; and
determining an anticipated gaseous fuel demand of the engine (102) according to the requested NG; and
operating the engine (102) with the second fuel according to the second control loop (204) comprises operating the gas generator (104, 106, 108) at the requested NG.

6. The method of Claim 1, wherein to bumplessly transition the engine (102) to operate with the second fuel, the method further comprises operating the engine (102) with a mixture of the first fuel and the second fuel during the bumpless transition.

7. The method of any preceding claim, wherein the engine (102) is comprised by an aircraft, and the bumpless transition is initiated by a pilot of the aircraft.

8. A dual fuel gas turbine engine (102) comprising:
a controller (120) configured to:
operate the engine (102) with a first fuel according to a first control loop (202);
while the engine (102) is operating with the first fuel, bumplessly transition the engine (102) to operate with a second fuel; and
operate the engine (102) with the second fuel according to a second control loop (204).

9. The engine (102) of Claim 8, further comprising:
a gas generator (104, 106, 108);
a combustion chamber;
a combustion burner;
a gaseous fuel pressure regulating valve (PRV) (130);
a gaseous fuel metering valve (FMV) (130); and
a fuel switching valve (138),
wherein:
the first fuel is a liquid fuel;
the second fuel is a gaseous fuel; and
to bumplessly transition the engine (102) to operate with the second fuel, the controller (120) is further configured to:
regulate via the gaseous fuel PRV (130), based on a predetermined inlet pressure (Pin) corresponding with a requested gas generator speed (NG), a Pin of the gaseous fuel FMV (130);
when the Pin of the gaseous FMV (130) achieves a Pin accuracy corresponding with the predetermined Pin, open the gaseous FMV (130); and
when an outlet pressure (Pout) of the gaseous FMV (130) is greater than a predetermined maximum of combustion burner pressure (Pcomb), open the fuel switching valve (138) to allow the gaseous fuel to enter the combustion chamber and shutoff a supply of the liquid fuel from the combustion chamber.

10. The engine (102) of Claim 9, wherein:
to operate the engine (102) with the first fuel according to the first control loop (202), the controller (120) is further configured to:
operate the gas generator at the requested NG; and
determine an anticipated liquid fuel demand of the engine (102) according to the requested NG; and
to operate the engine (102) with the second fuel according to the second control loop (204), the controller (120) is further configured to operate the gas generator (104, 106, 108) at the requested NG.

11. The engine (102) of Claim 8, further comprising:
a gas generator (104, 106, 108);
a combustion chamber;
a combustion burner;
a liquid fuel control unit (124);
a liquid fuel metering valve (FMV) (130); and
a fuel switching valve (138),
wherein:
the first fuel is a gaseous fuel;
the second fuel is a liquid fuel; and
to bumplessly transition the engine (102) to operate with the second fuel, the controller (120) is further configured to:
regulate a supply of the liquid fuel via the liquid fuel control unit (124), based on a predetermined fuel schedule vs liquid FMV command (126) corresponding with a requested gas generator speed (NG); and
upon receiving a transition request, opening the fuel switching valve (138) to allow the liquid fuel to enter the combustion chamber and shutoff a supply of the gaseous fuel from the combustion chamber.

12. The engine (102) of Claim 11, wherein:
to operate the engine (102) with the first fuel according to the first control loop (202), the controller (120) is further configured to:
operate the gas generator at the requested NG; and
determine an anticipated gaseous fuel demand of the engine (102) according to the requested NG; and
to operate the engine (102) with the second fuel according to the second control loop (204), the controller (120) is further configured to operate the gas generator (104, 106, 108) at the requested NG.

13. The engine (102) of Claim 8, wherein to bumplessly transition the engine (102) to operate with the second fuel, the controller (120) is further configured to operate the engine (102) with a mixture of the first fuel and the second fuel during the bumpless transition.

14. An aircraft comprising the engine (102) of any of claims 8 to 13, configured such that the bumpless transition is initiated by a pilot of the aircraft.

15. A non-transitory machine readable medium containing instructions that when executed cause at least one processor to carry out the method of any of claims 1 to 7.
